Europäisches Patentamt

European Patent Office

Office européen des brevets

(19)

(11) Veröffentlichungsnummer : **0 340 481 B1**

## (12) EUROPÄISCHE PATENTSCHRIFT

(45) Veröffentlichungstag der Patentschrift :
04.03.92 Patentblatt 92/10

(51) Int. Cl.$^5$ : **G01D 5/248**

(21) Anmeldenummer : **89106295.2**

(22) Anmeldetag : **10.04.89**

(54) Anordnung zur Auswertung von Signalen eines Inkrementalgebers.

(30) Priorität : **06.05.88 DE 3815533**

(43) Veröffentlichungstag der Anmeldung :
**08.11.89 Patentblatt 89/45**

(45) Bekanntmachung des Hinweises auf die
Patenterteilung :
**04.03.92 Patentblatt 92/10**

(84) Benannte Vertragsstaaten :
**CH DE FR GB IT LI SE**

(56) Entgegenhaltungen :
**DE-A- 2 352 975**
**DE-A- 3 636 000**
**DE-A-22 072 24**
**DE-C- 2 930 793**
**DE-C- 3 219 894**
**DE-C- 3 318 351**

(73) Patentinhaber : **Heidelberger Druckmaschinen**
**Aktiengesellschaft**
**Kurfürsten-Anlage 52-60 Postfach 10 29 40**
**W-6900 Heidelberg 1 (DE)**

(72) Erfinder : **Hauck, Dieter**
**Höhenweg 36**
**W-6930 Eberbach (DE)**
Erfinder : **May, Karl-Heinz**
**Hansstrasse 13a**
**W-6806 Viernheim (DE)**
Erfinder : **Müller, Hans**
**Albrecht-Dürer-Strasse 15**
**W-6902 Sandhausen (DE)**
Erfinder : **Rehberger, Jürgen**
**Talstrasse 3**
**W-6915 Dossenheim (DE)**

(74) Vertreter : **Stoltenberg, Baldo Heinz-Herbert et**
**al**
**c/o Heidelberger Druckmaschinen AG**
**Kurfürsten-Anlage 52-60**
**W-6900 Heidelberg 1 (DE)**

EP 0 340 481 B1

## Beschreibung

Die Erfindung betrifft eine Anordnung zur Auswertung von Signalen eines Inkrementalgebers, insbesondere bei einer Druckmaschine, wobei mindestens zwei gegeneinander phasenverschobene Tachosignale erzeugt werden, die gezählt werden, wenn eine zulässige Kombination der Tachosignale vorliegt.

Um die Position eines Maschinenteils, insbesondere die Drehlage eines rotierenden Maschinenteils, zu ermitteln und für Steuerungs- bzw. Regelzwecke zu verwenden, ist es bekannt, mit Hilfe eines Inkrementalgebers zwei gegeneinander phasenverschobene Tachosignale zu erzeugen und deren einzelne Impulse zu zählen. Dabei kann es jedoch zu Fehlern kommen, wenn den Tachosignalen Störimpulse überlagert sind. Diese Impulse können beispielsweise durch Einstreuungen in Verbindungsleitungen zwischen dem Inkrementalgeber und einem Steuergerät entstehen. Ferner kann eine Ursache für Störimpulse auch im Inkrementalgeber selbst liegen, wenn beispielsweise lichtundurchlässige Teilchen in einen optischen Inkrementalgeber eindringen.

Es ist bereits eine Schaltungsanordnung zur digitalen Verarbeitung mehrphasiger Impulsfolgen eines Impulsgebers bekannt (DE 36 36 000 A1), bei welcher vor einem Vorwärts-Rückwärts-Zähler ein Impulsumsetzer vorgesehen ist, in welchem eine Auslassung einzelner Impulse oder eine Versetzung von Impulsflanken der Impulsfolge stattfindet. Dieses dient dazu, die Frequenz der vom Impulsgeber abgeleiteten Impulse zu teilen, um einen gewünschten Maßstab für die Anzeige der Bewegung einer Maschine zu erhalten. Ein Schutz gegen gestörte Impulse ist damit nicht verbunden.

Es sind ferner Schaltungsanordnungen bekannt (DE 33 18 351 C2, DE 32 19 894 C2), bei welchen besondere Vorkehrungen getroffen sind, um die Drehrichtung zu erkennen und Unsicherheiten im Bereich einer Richtungsumkehr zu verhindern. Besondere Maßnahmen zur Sicherung gegen Störimpulse sind jedoch auch hier nicht vorhanden.

Bei einer weiteren bekannten Schaltungsanordnung (DE 29 30 793 C2) sollen ebenfalls Störungen verhindert werden, die auf Pendelungen der Maschine im Bereich der Übergänge zwischen verschiedenen Signalpegeln beruhen, also im wesentlichen im Stillstand der Maschine bei eingeschalteter Steuerung auftreten. Dazu ist bei dieser Schaltungsanordnung vorgesehen, daß die Impulslängen und die Impulspausen der Impulsfolgen gleich oder in etwa gleich groß sind, daß die Impulsfolgen an Eingänge eines Exklusiv-Oder-Gliedes gelegt sind, das zeitverzögert die Takteingänge zweier an ihren Eingängen von je einer der Impulsfolgen beaufschlagten Flip-Flops speist, deren Ausgangssignale an ein Exklusiv-Oder-Glied gelegt sind, dem eine digital arbeitende Weg- bzw. Positionserfassungseinrichtung nachgeschaltet ist. Diese bekannte Schaltungsanordnung eliminiert jedoch nur Störungen innerhalb eines bestimmten Zeitbereichs und ist somit für Störimpulse, die innerhalb eines großen Drehzahlbereichs auftreten können, nicht geeignet.

Schließlich ist ein fehlergesichertes inkrementales Wegmeßsystem bekannt (DAS 2 207 224), bei welchem im Inkrementalgeber mehr als zwei, insbesondere vier Abtaster, zwei Zähler und ein Vergleicher für die beiden Zählerstände vorgesehen sind. Dieses bedeutet jedoch einen erheblichen Aufwand bezüglich der Abtasteinrichtungen und der Auswertungsschaltung.

Aufgabe der Erfindung ist es, eine einwandfreie Auswertung von Signalen eines Inkrementalgebers zu ermöglichen, auch wenn diese gestört sind.

Die erfindungsgemäße Anordnung ist dadurch gekennzeichnet, daß einem Zähler ein Schaltnetz vorgeschaltet ist, daß die Tachosignale dem Schaltnetz zuführbar sind, und daß Ausgänge des Zählers mit Eingängen des Schaltnetzes verbunden sind.

Gemäß Weiterbildungen der erfindungsgemäßen Anordnungs ist vorgesehen, daß ein Signal zur Steuerung der Zählrichtung durch Vergleich eines der Tachosignale mit der zweitgeringstwertigen Stelle des Zählerstandes erzeugt wird und daß ein Freigabesignal, welches eine Zählung der Tachosignale ermöglicht, durch einen Vergleich zweier Tachosignale und einem anschließenden Vergleich mit der geringstwertigen Stelle des Zählerstandes erzeugt wird.

Eine weitere Erhöhung der Störsicherheit wird gemäß einer anderen Weiterbildung der Erfindung dadurch erzielt, daß ein unabhängig von den Tachosignalen abgeleitetes Richtungssignal mit aus den Tachosignalen abgeleiteten Signalen zur Steuerung der Zählrichtung verknüpft wird und daß das durch die Verknüpfung gewonnene Signal mit einem aus den Tachosignalen abgeleiteten Freigabesignal zur Bildung eines weiteren Freigabesignals verknüpft wird.

Gemäß einer vorteilhaften Ausgestaltung dieser Weiterbildung wird ein Fehlverhalten bei geringen Geschwindigkeiten dadurch vermieden, daß ein Geschwindigkeitssignal abgeleitet wird, welches bei einer vorgegebenen Geschwindigkeit des Inkrementalgebers von einem ersten in einen zweiten logischen Zustand übergeht, und daß das Geschwindigkeitssignal mit dem Signal zur Steuerung der Zählrichtung und dem Richtungssignal derart verknüpft wird, daß eine Zählung der Tachosignale bei geringeren Geschwindigkeiten ununterbrochen erfolgt.

Diese Anordnung zeichnet sich einerseits durch einen geringen Aufwand aus, andererseits wird bei der Verwendung eines einem Rechner vorgeschalteten Zählers der Rechner von der laufenden Zählung der Impulse entlastet. Bei einer vorteilhaften Weiterbildung der Anordnung ist vorgesehen, daß weiteren Eingängen des Schaltnetzes ein Richtungssignal und ein Geschwindigkeitssignal, welches bei einer vorgegebenen Geschwindigkeit des Inkrementalgebers von einem ersten in einen zweiten logischen Zustand übergeht, zuführbar sind. Damit wird in einfacher Weise eine weitere Überprüfung der Tachosignale ermöglicht.

Zur weiteren Erhöhung der Betriebssicherheit trägt eine andere Weiterbildung der erfindungsgemäßen Anordnung bei, die darin besteht, daß zwischen dem Inkrementalgeber und dem Schaltnetz ein Umschalter angeordnet ist, mit dem Testsignale aufschaltbar sind. Hierdurch wird ein einfacher Selbsttest der erfindungsgemäßen Anordnung ermöglicht, der beispielsweise automatisch bei dem Einschalten der Maschine durchgeführt werden kann.

Ausführungsbeispiele der Erfindung sind in der Zeichnung anhand mehrerer Figuren dargestellt und in der nachfolgenden Beschreibung näher erläutert. Es zeigt:

Fig. 1 eine Anordnung zur Auswertung von Tachosignalen mit einem Ausführungsbeispiel der erfindungsgemäßen Anordnung,

Fig. 2 ein erstes Ausführungsbeispiel,

Fig. 3 ein weiteres Ausführungsbeispiel,

Fig. 4 ein Schaltnetz, das Teil der Schaltungen nach den Figuren 2 und 3 ist,

Fig. 5 Zeitdiagramme einiger bei der Anordnung nach Fig. 2 verwendeter Signale.

Fig. 6 einen Automatengraphen zur Erläuterung der Funktion des Schaltnetzes und

Fig. 7 ein weiteres Schaltnetz.

Gleiche Teile sind in den Figuren mit gleichen Bezugszeichen versehen.

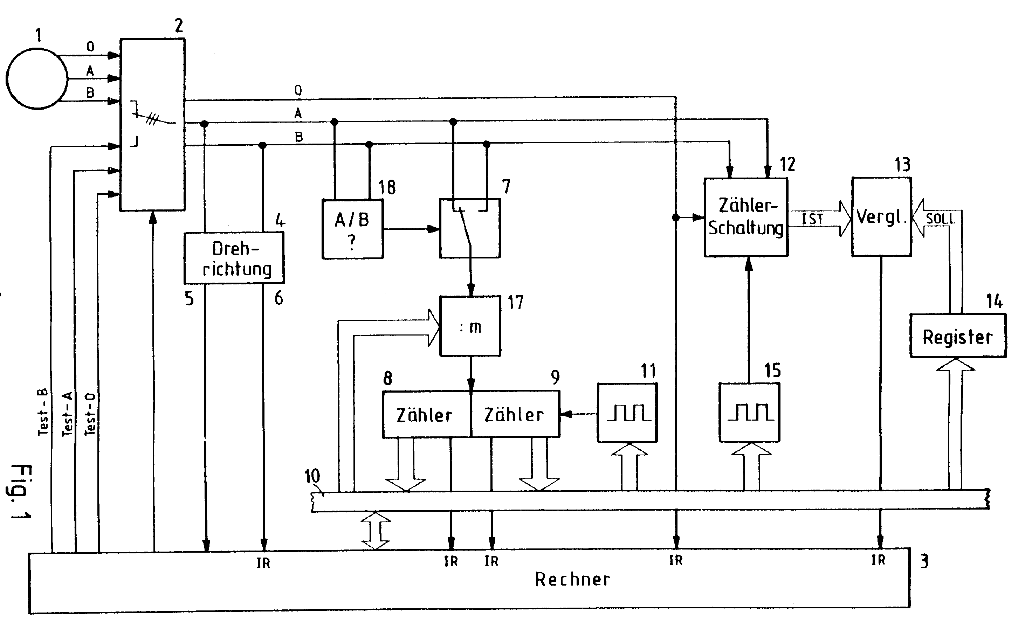

Bei der Anordnung nach Fig. 1 ist ein an sich bekannter Inkrementalgeber 1 vorgesehen. Derartige Inkrementalgeber bestehen beispielsweise aus einer mit optischen Markierungen versehenen Teilscheibe, die von opto-elektrischen Wandlern abgetastet wird. Dabei gibt einer der opto-elektrischen Wandler während einer Umdrehung einen Impuls 0 ab. Ferner werden Tachosignale A und B erzeugt, die mäanderförmig und zueinander um 90° phasenverschoben sind. Bei einem gebräuchlichen Inkrementalgeber umfassen die Tachosignale A und B jeweils 1024 Impulse pro Umdrehung.

Die Tachosignale O, A und B werden Eingängen eines Umschalters 2 zugeführt, dessen weitere Eingänge mit elektronisch erzeugten Testsignalen Test-0, Test-A und Test-B beaufschlagt sind. Der Umschalter ist vom Rechner 3 steuerbar, so daß in einer Test-Betriebsart die im folgenden beschriebenen Schaltungen auch im Stillstand der Maschine getestet werden können.

Die Tachosignale A und B werden zur Erfassung der Drehrichtung und der Position sowie zur Messung der Geschwindigkeit bzw. Drehzahl ausgewertet. Zur Erfassung der Drehrichtung werden die Tachosignale A und B einer Schaltung 4 zugeführt. In diesem Zusammenhang, und zur Erläuterung wird auf die enropäische Patentanmeldung 89106294.5 verwiesen. Die Schaltung 4 weist zwei Ausgänge 5,6 auf, wobei am Ausgang 5 ein Signal zur Kennzeichnung der Drehrichtung ansteht und am Ausgang 6 ein Impuls bei Änderung der Drehrichtung abgegeben wird. Während das die Drehrichtung kennzeichnende Signal einem Dateneingang des Rechners zugeführt wird, erzeugt der Impuls am Ausgang 6 eine Programmunterbrechung (Interrupt, IR).

Die Messung der Drehzahl erfolgt mit zwei Zählern 8,9, denen über einen Umschalter 7 und einen Frequenzteiler 17 eines der Tachosignale A bzw. B zugeführt wird. Dabei wird der Umschalter 7 von einer Schaltung 18 derart gesteuert, daß bei Ausfall eines der Tachosignale das andere weitergeleitet wird. Der Frequenzteiler 17 ist programmierbar, wozu das jeweilige Teilerverhältnis über den Datenbus 10 vom Rechner 3 zugeführt wird. Den Zählern 8,9 wird ein Referenzsignal zugeführt, dessen Frequenz entsprechend der Auflösung der Drehzahlmessung wesentlich höher als die Frequenz der Tachosignale ist. Um auch bei hohen Drehzahlen eine hohe Auflösung der Drehzahmessung zu erreichen, ohne daß bei niedrigen Drehzahlen die Zähler 8,9 überlaufen, kann die Frequenz des Referenzsignals variiert werden. Dazu wird ein entsprechender Wert über das Bussystem 10 dem Oszillator 11 für das Referenzsignal zugeführt.

Die Messung der Drehzahl erfolgt nun derart, daß abwechselnd einer der Zähler zwischen zwei vom Frequenzteiler 17 abgegebenen Impulsen die Impulse des Referenzsignals zählt. Nach Beendigung des Zählvorganges wird eine Programmunterbrechung (IR) ausgelöst, worauf der Rechner den Zählerstand über den Datenbus 10 liest. Inzwischen wurde bereits der andere Zähler gestartet, so daß die Dauer einer jeden Periode der Ausgangssignale des Frequenzteilers 17 gemessen wird. Die Meßwerte werden im Rechner 3 in Drehzahlwerte umgerechnet.

Da zum Einlesen des Zählerstandes jeweils eine Programmunterbrechung ausgelöst wird, werden dadurch andere Programmabläufe im Rechner gestört. Um diese Störungen nicht zu häufig auftreten zu lassen, wird bei höheren Drehzahlen die Frequenz der Tachosignale A und B - wie bereits beschrieben - geteilt. Der Datenbus und der Rechner sind stark vereinfacht dargestellt, da geeignete Schaltungen und Bausteine hinreichend bekannt sind.

Zur Erfassung der Position werden die Tachosignale A und B und der Impuls 0 einer Zählerschaltung 12 zugeführt. Außerdem ist vorgesehen, daß der Impuls 0 eine Programmunterbrechung auslöst. Durch den Impuls 0 wird die Zählerschaltung rückgesetzt, so daß der Zählerstand die Position bzw. den Drehwinkel bezogen auf eine Anfangsstellung angibt. Dieser Wert wird bei der Anordnung nach Fig. 1 als Ist-Position einem Vergleicher 13 zugeführt und dort mit einer Soll-Position, welche vorher vom Rechner in ein Register 14 eingeschrieben wurde, verglichen. Ist die Maschine bei der Soll-Position angelangt, so sind beide Werte gleich und der Vergleicher 13 löst eine Programmunterbrechung aus, worauf der Rechner die bei der Soll-Position vorgesehenen Maßnahmen veranlaßt. Unmittelbar danach kann über das Register 14 eine neue Soll-Position eingegeben werden. Bis die Maschine diese neue Soll-Position erreicht, ist im Rechner keine laufende Erfassung der Position der Maschine erforderlich.

Zur Erhöhung der Auflösung bei der Positionsermittlung können der Zählerschaltung Zusatzimpulse von einem Zusatzimpulsgenerator 15 zugeführt werden, deren Frequenz einem Vielfachen der Frequenz der Tachosignale entspricht. Dazu wird der Oszillator 15 vom Rechner 3 aufgrund der Frequenzmessung mit Hilfe der Schaltungen 7 bis 11 gesteuert. Die Zählung der Zusatzimpulse ergibt die niederwertigen Stellen der dem Vergleicher 13 zugeführten Ist-Position. Bedingt durch die Trägheit der Maschine, ändert sich die Frequenz der Tachosignale nicht allzu schnell, so daß die Frequenzmessung und damit die Steuerung des Oszillators 15 für die nachfolgenden Perioden des Tachosignals mit ausreichender Genauigkeit erfolgen.

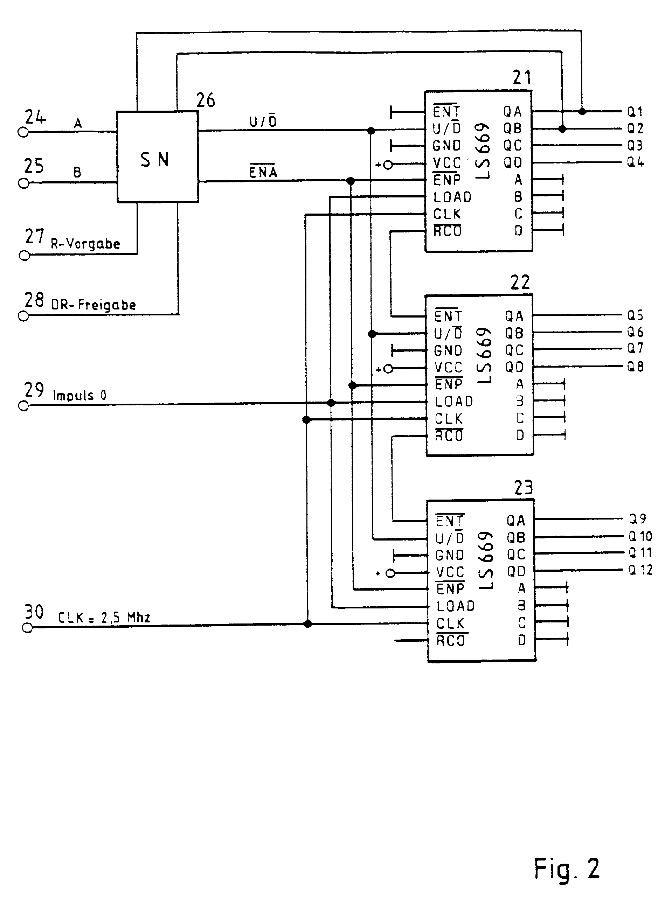

Fig. 2 zeigt ein Ausführungsbeispiel für die Zählerschaltung 12 (Fig. 1), bei welchem drei 4-Bit-Zähler vom Typ LS 669 vorgesehen sind. Übertragsausgänge der Zähler 21 und 22 sind mit Eingängen der Zähler 22 und 23 verbunden, so daß sich insgesamt ein 12-Bit-Zähler ergibt. Die Tachosignale A und B werden über Eingänge 24, 25 einem Schaltnetz 26 zugeführt, wo durch logische Verknüpfung mit den beiden niederwertigen Stellen Q1 und Q2 des Zählerstandes ein Aufwärts/Abwärtssignal U/$\overline{\text{D}}$ und ein Zählerfreigabesignal $\overline{\text{ENA}}$ abgeleitet werden. Außerdem werden dem Schaltnetz 26 über Eingänge 27, 28 die Signale DR-Vorgabe und DR-Freigabe zugeleitet. Das Signal DR-Vorgabe bezeichnet die Drehrichtung der Maschine. Das Signal DR-Freigabe besagt, ob die Drehzahl der Maschine über oder unterhalb einer Drehzahl ist, bei welcher eine Richtungsänderung erfolgen kann. Ein weiterer Eingang 29 ist für den Impuls 0 vorgesehen, der den LOAD-Eingang steuert und somit die Zähler rücksetzt, da die Dateneingänge A bis D auf Massepotential liegen. Schließlich weist die Zählerschaltung 12 einen Eingang 30 für ein Taktsignal CLK auf.

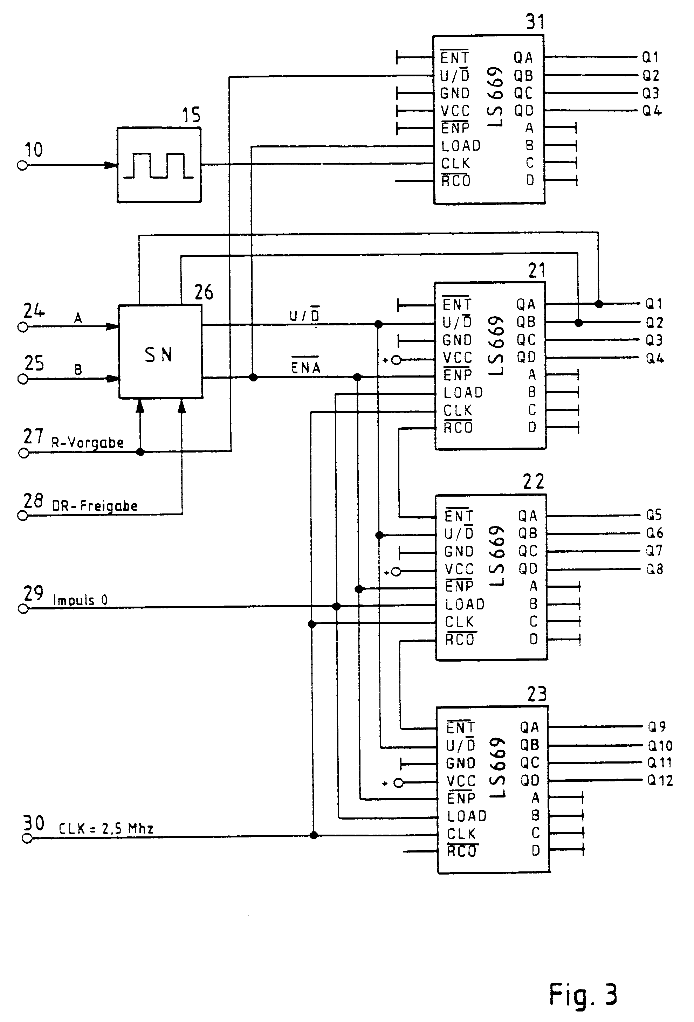

Wie bereits im Zusammenhang mit Fig. 1 erläutert, kann die Auflösung bei der Ermittlung der Position dadurch erhöht werden, daß mit Hilfe eines Oszillators 15 weitere Impulse erzeugt werden, deren Frequenz ein Vielfaches der Frequenz der Taktsignale beträgt. Bei dem in Fig. 3 dargestellten Ausführungsbeispiel erzeugt der Oszillator 15 Impulse mit 64-facher Tachofrequenz, die einem weiteren Zähler 31 vom Typ LS 669 zugeführt werden. Die Zählrichtung des weiteren Zählers 31 wird vom Signal DR-Vorgabe gesteuert. Damit wird der Zählerstand auf 16 Stellen (Q1' bis Q4', Q1 bis Q12) erweitert und die Auflösung auf das 16-fache erhöht, da durch die Auswertung beider Flanken der Tachosignale A und B bereits eine vierfache Zählfrequenz erzielt wird. Die Winkelauflösung beträgt bei einer Teilung von 1024 pro Vollkreis demnach 360/4096 = 0,0879 Grad ohne den weiteren Zähler 31 und 360/(4096*16) = 0,0055 Grad mit dem weiteren Zähler 31.

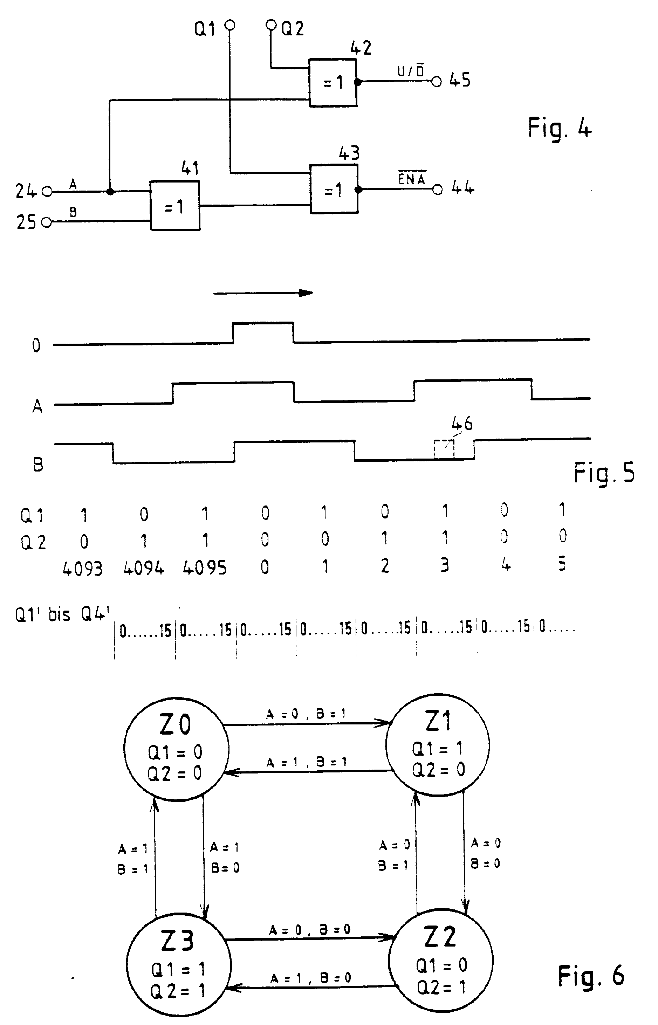

Fig. 4 zeigt ein Ausführungsbeispiel für das Schaltnetz 26, bei welchem die Signale DR-Freigabe und DR-Vorgabe nicht berücksichtigt werden. Das Schaltnetz umfaßt eine Antivalenz-Schaltung 41 sowie zwei Äquivalenz-Schaltungen 42, 43. Die Tachosignale A, B werden über die Eingänge 24, 25 beiden Eingängen der Antivalenz-Schaltung 41 zugeführt. Der Ausgang der Antivalenzschaltung 41 ist mit einem Eingang der Äquivalenz-Schaltung 43 verbunden, an deren anderem Eingang das geringstwertige Bit (LSB) Q1 anliegt. Am Ausgang 44 kann das Freigabesignal $\overline{\text{ENA}}$ für den Zähler entnommen werden. Zur Gewinnung eines Aufwärts/Abwärtssignals U/$\overline{\text{D}}$ werden das Tachosignal A sowie die zweitgeringstwertige Stelle Q2 des Zählerstandes der Äquivalenz-Schaltung 42 zugeführt, an deren Ausgang 45 das Signal U/$\overline{\text{D}}$ entnommen werden kann.

Die Funktion des Schaltnetzes nach Fig. 4 in Verbindung mit dem Zähler nach Fig. 2 wird im folgenden anhand von Fig. 5 näher erläutert. Fig. 5 zeigt Zeitdiagramme der Signale O, A und B für eine vorgegebene Drehrichtung, beispielsweise für Rechtslauf. Außerdem sind in Fig. 5 Werte von Q1 und Q2 des Zählers 21 und der gesamte Zählerstand Q1 bis Q12 angegeben. Schließlich ist der Zählerstand Q1' bis Q4' (Fig. 3) angedeutet.

Das Signal O tritt einmal während jeder Umdrehung auf, während die Tachosignale A und B entsprechend der Teilung des Inkrementalgebers häufiger auftreten - beispielsweise 1024 mal pro Umdrehung. Die Tachosignale A und B sind um 90° gegeneinander phasenverschoben. Durch den Impuls 0 wird der Zähler rückgesetzt, so daß der Zählerstand 0 wird und damit auch die beiden niederwertigen Stellen Q1 und Q2 den Wert 0 annehmen. Nach der ersten darauffolgenden Flanke des Tachosignals A werden A und B verschieden groß, so daß am Ausgang der Antivalenz-Schaltung 41 der Wert 1 liegt. Durch Verknüpfung mit Q1 = 0 in der Äquivalenz-Schaltung 43 wird der Ausgang 44 ebenfalls zu 0, was eine Freigabe des Zählers bewirkt. Da zu diesem Zeitpunkt Q2 = 0 ist und A = 0 wird, wird U/$\overline{\text{D}}$ = 1, was ein Inkrementieren des Zählers (Aufwärtszählen) bewirkt.

Durch die Inkrementierung des Zählers wird Q1 = 1, was wiederum bewirkt, daß bei der folgenden Flanke des Tachosignals B die Gleichheit der Tachosignale A und B zu $\overline{\text{ENA}}$ = 0 führt, so daß eine weitere Inkrementierung des Zählers erfolgt.

Zu Beginn der darauffolgenden Viertelperiode der Tachosignale springt das Signal A auf 1, da jedoch Q2 ebenfalls = 1 ist, wird U/$\overline{\text{D}}$ = 1. Da ferner A und B verschieden, Q1 jedoch = 0 ist, ergibt sich $\overline{\text{ENA}}$ = 0, so daß der Zähler abermals inkrementiert wird.

Zur weiteren Erläuterung der Funktion des Schaltnetzes gemäß Fig. 4 in Verbindung mit der Zählerschaltung, insbesondere mit dem Zähler 21 (Fig. 2) wird im folgenden auf den Automatengraphen gemäß Fig. 6 Bezug genommen. Danach kann das Schaltnetz 26 einschließlich der beiden niederwertigen Stellen des Zählers 21 die Zustände Z0, Z1, Z2 und Z3 einnehmen. Die bei diesen Zuständen an den Ausgängen Q1 und Q2 anstehenden Werte sind in den die Zustände darstellenden Kreisen angegeben. Ein Übergang von einem Zustand in einen anderen kann nur im Sinne eines Aufwärts- bzw. Abwärtszählen erfolgen, was in Fig. 6 durch Pfeile zwischen den Kreisen angedeutet ist. Dabei bedeuten die Zahlen an den Pfeilen die für den jeweiligen Übergang erforderlichen Werte der Tachosignale A und B. So wird beispielsweise ein Übergang vom Zustand Z0 zum Zustand Z1 durch A = 0 und B = 1 verursacht. Wird danach B = 0, so geht das Schaltnetz in den Zustand 2 über.

Am Beispiel eines Störimpulses 46 (Fig. 5) wird die Filterwirkung des Schaltnetzes erläutert. Vor dem Störimpuls befindet sich das Schaltnetz im Zustand Z3. Dadurch, daß während des Störimpulses 46 das Tachosignal B den Wert 1 annimmt, erfolgt ein Weiterschalten in den Zustand Z0, da auch das Tachosignal A = 1 ist. Am Ende des Störimpulses wird jedoch wieder B = 0, so daß das Schaltnetz in den Zustand Z3 zurückgesetzt wird. Der Zähler wird also durch den Störimpuls 46 inkrementiert, nach dem Störimpuls jedoch wieder dekrementiert, so daß keine Verfälschung des Zählergebnisses erfolgt.

Das in Fig. 4 dargestellte Schaltnetz bewirkt also, daß in einem beliebigen Zustand nur die jeweils benachbarten Zustände zugelassen werden. Auf den Zählerstand 0 kann also nur einer der Zählerstände 1 oder 4095 folgen. Eine weitere Erhöhung der Betriebssicherheit wird durch die Vorgabe der Drehrichtung über den Rechner 3 (Fig. 1) gewonnen. Dabei wird eine durch die Tachosignale A und B angezeigte Änderung der Drehrichtung als Fehler erkannt, wenn dieses im Widerspruch zu dem vom Rechner zugeführten Signal DR-Vorgabe steht. Diese zusätzliche Prüfung kann allerdings bei Stillstand oder kleinen Drehzahlen zu Fehlern führen und wird daher abgeschaltet, wenn aufgrund geringer Drehzahlen ein Drehrichtungswechsel möglich ist. Es wird daher vom Rechner ein weiteres Signal DR-Freigabe zugeführt, das oberhalb einer vorgegebenen Drehzahl den Wert 1 annimmt.

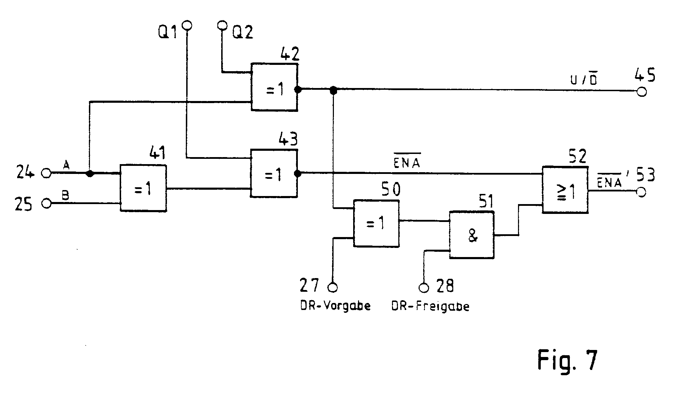

Das Schaltnetz gemäß Fig. 7 enthält zusätzlich zu den bereits im Zusammenhang mit Fig. 4 erläuterten Teilen eine Antivalenz-Schaltung 50, eine Und-Schaltung 51 und eine Oder-Schaltung 52. Das Ausgangssignal $\overline{\text{ENA}}$ der Äquivalenz-Schaltung 43, das bei dem Schaltnetz nach Fig. 4 den Zähler sperrt ($\overline{\text{ENA}}$ = 1) oder freigibt ($\overline{\text{ENA}}$ = 0), wird bei dem Schaltnetz nach Fig. 7 nochmals durch eine Oder-Schaltung 52 gefiltert, deren Ausgangssignal $\overline{\text{ENA}}'$ über den Ausgang 53 dem Zähler zugeführt wird. Liegt am unteren Eingang der Oder-Schaltung 52 der Wert 0, so wird $\overline{\text{ENA}}'$ = $\overline{\text{ENA}}$, so daß das Schaltnetz nach Fig. 6 wie das Schaltnetz nach Fig. 4 arbeitet. Bei einer 1 am unteren Eingang wird jedoch der Ausgang 53 unabhängig vom Wert von $\overline{\text{ENA}}$ auf 1 gesetzt, was ein Sperren des Zählers bewirkt.

Dieses Sperren des Zählers kann jedoch nur erfolgen, wenn beiden Eingängen der Und-Schaltung 51 der Wert 1 zugeführt wird. Dieses ist der Fall, wenn sowohl das Signal DR-Freigabe den Wert 1 aufweist, als auch die beiden unabhängig voneinander gewonnenen die Drehrichtung kennzeichnenden Signale U/$\overline{\text{D}}$ und DR-Vorgabe verschieden voneinander sind.

## Patentansprüche

1. Anordnung zur Auswertung von Signalen eines Inkrementalgebers, insbesondere bei einer Druckmaschine, wobei mindestens zwei gegeneinander phasenverschobene Tachosignale erzeugt werden, die gezählt werden, wenn eine zulässige Kombination der Tachosignale vorliegt, dadurch gekennzeichnet, daß einem Zähler (21, 22, 23) ein Schaltnetz (26) vorgeschaltet ist, daß die Tachosignale (A, B) dem Schaltnetz (26) zuführbar sind, und daß Ausgänge (Q1, Q2) des Zählers (21, 22, 23) mit Eingängen des Schaltnetzes (26) verbunden sind.

2. Anordnung nach Anspruch 1, dadurch gekennzeichnet, daß der Zähler nach Flanken beider Richtungen jedes Tachosignals de- oder inkrementiert wird.

3. Anordnung nach Anspruch 2, dadurch gekennzeichnet, daß ein Signal (U/$\overline{\text{D}}$) zur Steuerung der Zählrichtung durch Vergleich eines der Tachosignale mit der zweitgeringstwertigen stelle des Zählerstandes erzeugt wird.

4. Anordnung nach Anspruch 2, dadurch gekennzeichnet, daß ein Freigabesignal ($\overline{\text{ENA}}$), welches eine Zählung der Tachosignale ermöglicht, durch einen Vergleich zweier Tachosignale und einem anschließenden Vergleich mit der geringstwertigen Stelle des Zählerstandes erzeugt wird.

5. Anordnung nach Anspruch 2, dadurch gekennzeichnet, daß ein unabhängig von den Tachosignalen abgeleitetes Richtungssignal mit aus den Tachosignalen abgeleiteten Signalen zur Steuerung der Zählrichtung verknüpft wird und daß das durch die Verknüpfung gewonnene Signal mit einem aus den Tachosignalen abgeleiteten Freigabesignal zur Bildung eines weiteren Freigabesignals verknüpft wird.

6. Anordnung nach Anspruch 5, dadurch gekennzeichnet, daß ein Geschwindigkeitssignal abgeleitet wird, welches bei einer vorgegebenen Geschwindigkeit des Inkrementalgebers von einem ersten in einen zweiten logischen Zustand übergeht, und daß das Geschwindigkeitssignal mit dem Signal zur Steuerung der Zählrichtung und dem Richtungssignal derart verknüpft wird, daß eine Zählung der Tachosignale bei geringeren Geschwindigkeiten ununterbrochen erfolgt.

7. Anordnung nach Anspruch 1, dadurch gekennzeichnet, daß weiteren Eingängen (27, 28) des Schaltnetzes ein Richtungssignal und ein Geschwindigkeitssignal, welches bei einer vorgegebenen Geschwindigkeit des Inkrementalgebers (1) von einem ersten in einen zweiten logischen Zustand übergeht, zuführbar sind.

8. Anordnung nach Anspruch 1, dadurch gekennzeichnet, daß zwischen dem Inkrementalgeber (1) und dem Schaltnetz (26) ein Umschalter (2) angeordnet ist, mit dem Testsignale aufschaltbar sind.

## Claims

1. Arrangement for evaluating signals of an incremental pulse generator, especially in a printing machine, at least two mutually phase-shifted rotary-speed signals being generated and counted, if a permissible combination of angular-speed signals is present, characterized in that a combinational circuit (26) is followed by a counter (21, 22, 23), that said angular-speed signals (A, B) may be fed to said combinational circuit (26), and that outputs (Q1, Q2) of said counter (21, 22, 23) are connected to inputs of said combinational circuit (26).

2. Arrangement according to Claim 1, characterized in that the counter is respectively decremented and incremented in accordance with edges of both directions of each of the angular-speed signals.

3. Arrangement according to Claim 2, characterized in that a signal (U/D) is generated for controlling the counting direction by comparing one of the angular-speed signals with a second least significant figure of a count.

4. Arrangement according to Claim 2, characterized in that there is generated an enabling signal (ENA) permitting a counting of the angular-speed signals by a comparison of two angular-speed signals and a subsequent comparison with a least significant figure of a count.

5. Arrangement according to Claim 2, characterized in that a direction signal, derived independently of the angular-speed signals, is combined with signals which are drived from the angular-speed signals for controlling the counting direction, and that the signal resulting from this combination is combined with an enabling signal, which is derived from the angular-speed signals, for forming a further enabling signal.

6. Arrangement according to Claim 5, characterized in that a speed signal is derived which merges from a first into a second logical state at a given speed of the incremental pulse generator, and that said speed signal is combined with the signal for controlling the counting direction and the direction signal such that a counting of the angular-speed signals is uninterruped at very low speeds.

7. Arrangement according to Claim 1, characterized in that a direction signal and a speed signal may be fed to further inputs (27, 28) of the combinational circuit, said direction signal and said speed signal merging from a first into a second logical state at a given speed of the incremental pulse generator (1).

8. Arrangement according to Claim 1, characterized in that a change-over switch (2) by means of which test signals may be superimposed is provided between the incremental pulse generator (1) and the combinational circuit (26).

## Revendications

1. Système pour analyser les signaux d'un générateur incrémentiel, notamment dans une machine d'impression, où au moins deux signaux tachymétriques mutuellement déphasés sont produits et sont comptés lorsqu'il existe une combinaison admissible des signaux tachymétriques, caractérisé en ce qu'il est prévu avant un compteur (21, 22, 23) un réseau de commutation (26), en ce que les signaux de commutation (A, B) peuvent être appliqués au réseau de commutation (26) et en ce que des sorties (Q1, Q2) du compteur (21, 22, 23) sont reliées à des entrées du réseau de commutation (26).

2. Système selon la revendication 1, caractérisé en ce que le compteur est décrémenté et incrémenté en fonction de flancs de chaque signal tachymétrique dans les deux directions.

3. Système selon la revendication 2, caractérisé en ce qu'un signal $(U/\overline{D})$ est produit pour une commande de la direction de comptage par comparaison d'un des signaux tachymétriques avec l'avant-dernier emplacement de poids faible du compte du compteur.

4. Système selon la revendication 2, caractérisé en ce qu'un signal de libération $(\overline{ENA})$, qui permet un comptage des signaux tachymétriques, est produit par comparaison de deux signaux tachymétriques et une comparaison subséquente avec le dernier emplacement de poids faible du compte du compteur.

5. Système selon la revendication 2, caractérisé en ce qu'un signal de direction, obtenu indépendamment des signaux tachymétriques, est combiné avec les signaux dérivés des signaux tachymétriques pour la commande de la direction de comptage et que le signal obtenu par la combinaison est lui-même combiné avec un signal de libération dérivé des signaux tachymétriques pour former un autre signal de libération.

6. Système selon la revendication 5, caractérisé en ce qu'un signal de vitesse est produit et passe, pour une vitesse prédéterminée du générateur incrémentiel, d'un premier état logique à un second état logique et en ce que le signal de vitesse est combiné avec le signal de commande de la direction de comptage et le signal de direction de telle sorte qu'un comptage des signaux tachymétriques à de basses vitesses s'effectue de façon ininterrompue.

7. Système selon la revendication 1, caractérisé en ce que d'autres entrées (27, 28) du réseau de commutation peuvent recevoir un signal de direction et un signal de vitesse, qui passe, pour une vitesse prédéterminée du générateur incrémentiel (1), d'un premier état logique dans un second état logique.

8. Système selon la revendication 1, caractérisé en ce qu'il est prévu entre le générateur incrémentiel (1) et le réseau de commutation (6) un commutateur, à l'aide duquel des signaux de contrôle peuvent être distribués.

Fig. 1

Fig. 2

Fig. 3

Fig. 4

Fig. 5

Q1' bis Q4'

| | 4093 | 4094 | 4095 | 0 | 1 | 2 | 3 | 4 | 5 |
|---|---|---|---|---|---|---|---|---|---|
| Q1 | 1 | 0 | 1 | 0 | 1 | 0 | 1 | 0 | 1 |
| Q2 | 0 | 1 | 1 | 0 | 0 | 1 | 1 | 0 | 0 |

Fig. 6

Fig. 7